(19) **Europäisches Patentamt / European Patent Office / Office européen des brevets**

(11) **EP 4 582 584 A1**

(12) **EUROPEAN PATENT APPLICATION**
published in accordance with Art. 153(4) EPC

(43) Date of publication:
09.07.2025 Bulletin 2025/28

(21) Application number: 23860483.9

(22) Date of filing: 31.08.2023

(51) International Patent Classification (IPC):
$C23C\ 22/00^{(2006.01)}$   $C01B\ 35/12^{(2006.01)}$
$C21D\ 8/12^{(2006.01)}$   $C21D\ 9/46^{(2006.01)}$

(52) Cooperative Patent Classification (CPC):
C01B 35/12; C21D 8/12; C21D 9/46; C23C 22/00;
Y02P 10/20

(86) International application number:
PCT/JP2023/031815

(87) International publication number:
WO 2024/048721 (07.03.2024 Gazette 2024/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 31.08.2022 JP 2022137922

(71) Applicant: NIPPON STEEL CORPORATION
Chiyoda-ku
Tokyo 100-8071 (JP)

(72) Inventors:
• YAMAGATA, Ryutaro
  Tokyo 100-8071 (JP)
• TAKEDA, Kazutoshi
  Tokyo 100-8071 (JP)
• TAKAHASHI, Takafumi
  Tokyo 100-8071 (JP)

(74) Representative: Vossius & Partner
Patentanwälte Rechtsanwälte mbB
Siebertstrasse 3
81675 München (DE)

(54) **MIXED POWDER, MGO PARTICLES, METHOD FOR PRODUCING GRAIN-ORIENTED ELECTRICAL STEEL SHEET, METHOD FOR PRODUCING MGO PARTICLES, AND METHOD FOR PRODUCING MIXED POWDER**

(57) The mixed powder is a mixed powder for an annealing separator containing MgO as a main agent, wherein an average particle size of the mixed powder is 0.10 μm or more and 8.50 μm or less, the mixed powder contains B, and a B content contained in the entire mixed powder is 0.005 mass% or more and less than 0.040 mass%, a proportion of tri-coordinated boron in the B is 5 mass% or more and less than 70 mass%, and a ratio of a circumferential length to a thickness of primary particles containing the MgO is 6.0 or more.

EP 4 582 584 A1

**Description**

Technical Field

The present invention relates to a mixed powder, MgO particles, a method for manufacturing a grain-oriented electrical steel sheet, a method for manufacturing MgO particles, and a method for manufacturing a mixed powder. Priority is claimed on Japanese Patent Application No. 2022-137922, filed August 31, 2022, the content of which is incorporated herein by reference.

Background Art

A grain-oriented electrical steel sheet is a soft magnetism material, and is mainly used as an iron core material of a transformer. Thus, the grain-oriented electrical steel sheet is required to have magnetic characteristics such as high magnetization characteristics and low iron loss. Iron loss is a power loss due to consumption as thermal energy that occurs when the iron core is excited by an AC magnetic field, and is required to be as low as possible from the viewpoint of energy saving.

In the manufacture of a grain-oriented electrical steel sheet, a manufacturing method including steps of hot rolling, hot-band annealing, cold rolling, decarburization annealing, and final annealing is generally applied to a steel slab adjusted to have a predetermined composition. Among these steps, in the final annealing step, a steel sheet wound in a coil shape is annealed at a high temperature for a long time to develop the crystal orientation in a Goss orientation, which is good for magnetic characteristics (to increase the orientation development degree). At that time, an annealing separator is applied to prevent seizure of the coil.

As the annealing separator applied to the coil, an annealing separator containing magnesium oxide (MgO) as a main component is often used. This is because, when an annealing separator containing MgO as a main component is used, silicon dioxide ($SiO_2$) on a surface of a steel sheet reacts with MgO at the time of final annealing to apply tension to the surface of the steel sheet and form a forsterite ($Mg_2SiO_4$)-based coating (primary layer) that plays a role of imparting insulation properties to the steel sheet. That is, by using an annealing separator containing MgO as a main component, it is possible not only to prevent seizure at the time of final annealing but also to improve magnetic characteristics of a grain-oriented electrical steel sheet.

As described above, in the manufacture of a grain-oriented electrical steel sheet, characteristics of the grain-oriented electrical steel sheet can be changed by an annealing separator. Therefore, in recent years, studies have been conducted on trace components contained in magnesium oxide contained in an annealing separator. Furthermore, not only has the content of trace components been studied but also the structure of a compound containing trace component elements in magnesium oxide for an annealing separator.

For example, Patent Document 1 discloses a powder for an annealing separator containing 0.04 mass% or more and 0.30 mass% or less of boron and containing magnesium oxide as a main component, in which a proportion of tri-coordinated boron in the boron is 70% or more and 95% or less.

Patent Document 2 discloses a method for manufacturing a powder for an annealing separator, the method including baking a raw material containing one or both of magnesium hydroxide and magnesium carbonate and boron, and then adjusting a proportion of tri-coordinated boron by adjusting the moisture content of a baked product, in which a proportion of tri-coordinated boron in boron contained in the powder for an annealing separator is 70% or more and 95% or less.

In each of Patent Documents 1 and 2, the proportion of tri-coordinated boron is defined based on findings that 1) a coating reaction behavior at a high temperature (1100°C or higher) affects purification of impurities, 2) tri-coordinated boron affects the coating reaction behavior at a high temperature, and 3) tetra-coordinated boron not only does not contribute to the purification of impurities, but also enters a steel sheet during high-temperature annealing to form $Fe_2B$, and causes repeated bending deterioration.

Citation List

Patent Document

Patent Document 1
Japanese Unexamined Patent Application, First Publication No. 2017-128772
Patent Document 2
Japanese Unexamined Patent Application, First Publication No. 2020-15982

Summary of Invention

Technical Problem

In Patent Documents 1 and 2, it is described that by controlling the amount of boron and the proportion of tri-coordinated boron in a powder for an annealing separator, it is possible to solve the problems of poor coating external appearance due to insufficient reactivity at a high temperature and poor purification of impurities from steel. However, as a result of studies by the present inventors, it has been found that when the content of boron in MgO is increased, magnetic characteristics and coating characteristics (external appearance, adhesion) may be improved, but when the content of boron is excessively increased, boron excessively enters the steel sheet, and a coating of a nonmagnetic layer that inhibits secondary recrystallization develops, so that magnetic characteristics may be deteriorated. Therefore, in the techniques of Patent Documents 1 and 2, it cannot be said that the improvement of magnetic characteristics and coating characteristics is sufficient.

The present invention has been made in view of the above problems, and an object of the present invention is to provide a mixed powder, MgO particles, a method for manufacturing a grain-oriented electrical steel sheet, a method for manufacturing MgO particles, and a method for manufacturing a mixed powder, for manufacturing a grain-oriented electrical steel sheet in which an adverse effect on secondary recrystallization due to application of boron is suppressed and magnetic characteristics and coating characteristics are good.

Solution to Problem

The present inventors have studied a method for sufficiently obtaining magnetic characteristics and coating characteristics by application of boron even when a B content is suppressed. As a result, the present inventors have found that it is possible to suppress a large amount of B being contained in a steel sheet and to suppress an adverse effect on secondary recrystallization by suppressing a proportion of tri-coordinated boron in small MgO particles in which reactivity is high and a reaction occurs at a low temperature.

The gist of the present invention completed based on the above findings is as follows.

[1] A mixed powder according to an aspect of the present invention is a mixed powder for an annealing separator containing MgO as a main agent, in which an average particle size of the mixed powder is 0.10 $\mu$m or more and 8.50 $\mu$m or less, the mixed powder contains B, and a B content contained in the entire mixed powder is 0.005 mass% or more and less than 0.040 mass%, a proportion of tri-coordinated boron in the B is 5 mass% or more and less than 70 mass%, and a ratio of a circumferential length to a thickness of primary particles containing the MgO is 6.0 or more.

[2] The mixed powder according to [1] preferably contains Ca and satisfies formula (1) below.

$$0.05 \leq [Ca]/[BO_3] < 2.00... \quad \text{Formula (1)}$$

In formula (1), [Ca] is a Ca content (mass%) in the mixed powder, and $[BO_3]$ is a content (mass%) of the tri-coordinated boron in the mixed powder.

[3] In addition, in MgO particles according to another aspect of the present invention, an average particle size is 0.10 $\mu$m or more and 8.50 $\mu$m or less, a B content is 0.005 mass% or more and less than 0.040 mass%, a proportion of tri-coordinated boron in the B is 5 mass% or more and less than 70 mass%, and a ratio of a circumferential length to a thickness of primary particles is 6.0 or more.

[4] The MgO particles according to [3] preferably contain Ca and satisfies formula (2) below.

$$0.05 \leq [Ca]/[BO_3] < 2.00... \quad \text{Formula (2)}$$

In formula (2), [Ca] is a Ca content (mass%) in the MgO particles, and $[BO_3]$ is a content (mass%) of the tri-coordinated boron in the MgO particles.

[5] In addition, in a method for manufacturing a grain-oriented electrical steel sheet according to still another aspect of the present invention, an annealing separator containing the mixed powder according to [1] or [2] or the MgO particles according to [3] or [4] is used.

[6] In addition, in a method for manufacturing MgO particles according to still another aspect of the present invention, a raw material powder containing Mg-containing raw material particles containing one or two or more selected from the group consisting of magnesium hydroxide, basic magnesium carbonate, and magnesium carbonate in which a ratio of a circumferential length to a thickness of primary particles is 7.0 or more, and B-containing raw material particles containing B, in which an average particle size is 0.10 $\mu$m or more and 8.50 $\mu$m or less, is baked at a temperature of 700°C or higher and 1100°C or lower.

[7] In the method for manufacturing MgO particles according to [6], the raw material powder preferably contains more than 0 mass% and 0.02 mass% or less of Ca.

[8] In addition, in a method for manufacturing MgO particles according to still another aspect of the present invention, raw material particles containing B and containing one or two or more selected from the group consisting of magnesium hydroxide, basic magnesium carbonate, and magnesium carbonate in which an average particle size is $0.10 \ \mu m$ or more and $8.50 \ \mu m$ or less and a ratio of a circumferential length to a thickness of primary particles is 7.0 or more are baked at a temperature of 700°C or higher and 1100°C or lower.

[9] In the method for manufacturing MgO particles according to [8], the raw material particles preferably contain more than 0 mass% and 0.02 mass% or less of Ca.

[10] In addition, in a method for manufacturing a mixed powder according to still another aspect of the present invention, a raw material powder containing Mg-containing raw material particles containing one or two or more selected from the group consisting of magnesium hydroxide, basic magnesium carbonate, and magnesium carbonate in which a ratio of a circumferential length to a thickness of primary particles is 7.0 or more, and B-containing raw material particles containing B, in which an average particle size is $0.10 \ \mu m$ or more and $8.50 \ \mu m$ or less, is baked at a temperature of 700°C or higher and 1100°C or lower.

Advantageous Effects of Invention

According to the present invention, it is possible to provide a mixed powder, MgO particles, a method for manufacturing a grain-oriented electrical steel sheet, a method for manufacturing MgO particles, and a method for manufacturing a mixed powder, for manufacturing a grain-oriented electrical steel sheet in which an adverse effect on secondary recrystallization due to application of boron is suppressed and magnetic characteristics and coating characteristics are good.

Description of Embodiments

<Mixed powder>

A mixed powder according to an embodiment of the present invention is a mixed powder for an annealing separator containing MgO as a main agent, in which an average particle size of the mixed powder is $0.10 \ \mu m$ or more and $8.50 \ \mu m$ or less, the mixed powder contains B, and a B content contained in the entire mixed powder is 0.005 mass% or more and less than 0.040 mass%, a proportion of tri-coordinated boron in the B is 5 mass% or more and less than 70 mass%, and a ratio of a circumferential length to a thickness of primary particles containing the MgO is 6.0 or more. Details will be described below.

The mixed powder according to the present embodiment contains MgO as a main agent. The mixed powder contains, for example, 50.0 mass% or more of MgO. A proportion of MgO in the mixed powder is preferably 80.0 mass% or more, and more preferably 90.0 mass% or more.

The mixed powder contains MgO particles, but the MgO particles contained in the mixed powder are not limited to the MgO particles according to an embodiment of the present invention described later, and for example, MgO particles in which the proportion of MgO in the mixed powder is 50 mass% or more can be used.

The mixed powder according to the present embodiment contains boron (B). The mixed powder contains, for example, B-containing particles containing B. The B-containing particles may contain at least one of pure boron and a B compound, and examples of the B compound include $Na_2B_4O_7$, borax, calcium borate, and magnesium borate.

[Average particle size of mixed powder is $0.10 \ \mu m$ or more and $8.50 \ \mu m$ or less]

An average particle size of the mixed powder is $0.10 \ \mu m$ or more and $8.50 \ \mu m$ or less in terms of a volume-based equivalent circle average particle size. When the average particle size of the mixed powder is less than $0.10 \ \mu m$, reactivity becomes too high, a reaction with a coating becomes remarkable at a low temperature, a supply rate of Mg and B also increases, decomposition of precipitates at the time of secondary recrystallization is promoted, and grains other than the Goss orientation are likely to grow. As a result, magnetic characteristics are deteriorated. In addition, when the average particle size of the mixed powder is less than $0.10 \ \mu m$, seizure becomes a problem, and an external appearance and coating adhesion of the grain-oriented electrical steel sheet are deteriorated. Therefore, the average particle size of the mixed powder is set to $0.10 \ \mu m$ or more. The average particle size of the mixed powder is preferably $0.15 \ \mu m$ or more, and more preferably $0.30 \ \mu m$ or more.

On the other hand, when the average particle size of the mixed powder is more than $8.50 \ \mu m$, close contact between the steel sheet and the MgO layer becomes difficult, degassing is promoted, and heat resistance of precipitates is deteriorated, so that grains of an orientation other than the Goss orientation are likely to grow. As a result, magnetic characteristics are deteriorated. In addition, when the average particle size of the mixed powder is more than 8.50 $\mu$m, formation of a coating becomes insufficient, and the external appearance and the coating adhesion of the grain-oriented electrical steel sheet are deteriorated. The average particle size of the mixed powder is preferably 7.50 $\mu$m or less, and more preferably 7.00 $\mu$m or less.

For the average particle size of the mixed powder, a particle size distribution of a volume frequency is measured with a laser diffraction particle size distribution measuring apparatus (LA-920 manufactured by HORIBA, Ltd.), and an average particle size in an equivalent circle diameter is defined as the average particle size of the mixed powder. The measurement conditions are conditions in which a refractive index is set to 1.74 and dispersion treatment by ultrasonic waves is performed in pure water.

[B content is 0.005 mass% or more and less than 0.040 mass%]

The mixed powder contains 0.005 mass% or more and less than 0.040 mass% of boron. When a B content is less than 0.005 mass%, coating formation becomes non-uniform, and the external appearance of the grain-oriented electrical steel sheet and the coating adhesion of the grain-oriented electrical steel sheet are deteriorated. The B content is preferably 0.006 mass% or more, and more preferably 0.008 mass% or more.

On the other hand, when the B content contained in the mixed powder is 0.040 mass% or more, degassing from the steel sheet is excessively suppressed, so that gas pressure at a coating interface is excessively increased, and degassing in association with breakage of a coating occurs. As a result, coating formation becomes non-uniform, and the external appearance of the grain-oriented electrical steel sheet is deteriorated. Therefore, the B content in the mixed powder is set to less than 0.040 mass%. The B content is preferably 0.035 mass% or less.

The B content in the mixed powder is determined by performing quantitative analysis using inductively coupled plasma mass spectrometry (ICP-MS). For quantitative analysis by ICP-MS, an MgO powder is dissolved in a mixed acid of hydrochloric acid and nitric acid. At this time, if there is an undissolved residue, the residue is recovered and dissolved in an alkaline solution to perform analysis.

[Proportion of tri-coordinated boron in B is 5 mass% or more and less than 70 mass%]

Boron contained in the mixed powder is present in a form of tri-coordinated boron ($BO_3$) and tetra-coordinated boron ($BO_4$). Tri-coordinated boron is boron having a tri-coordinated structure in which three oxygen atoms are coordinated around a boron element, and tetra-coordinated boron is boron having a tetra-coordinated structure in which four oxygen atoms are coordinated around a boron element. Boron other than tri-coordinated boron is present as tetra-coordinated boron.

As a result of investigating the reactions of tri-coordinated boron and tetra-coordinated boron, it has been found that the influences on coating defects and external appearance characteristics are different. Specifically, tri-coordinated boron has a greater influence on the decomposition of precipitates while promoting coating formation than tetra-coordinated boron. In addition, it has been found that when an amount of tri-coordinated boron is excessively increased, the reactions of coating formation and decomposition of precipitates occur too intensively at a low temperature, and coating breakage occurs due to gas release. Therefore, it has been found that by shifting the timing of decomposition of precipitates, it is possible to form a good coating while preventing coating breakage. The smaller the particle size, or the higher the tri-coordinated boron ratio, the more promoted the decomposition of precipitates due to the formation of a coating at a low temperature.

The mixed powder according to the present embodiment contains 5 mass% or more and less than 70 mass% of tri-coordinated boron with respect to the content of B in the mixed powder. When the proportion of tri-coordinated boron in B is 5 mass% or more, magnetic characteristics and coating characteristics can be improved. Therefore, the proportion of tri-coordinated boron in B is set to 5 mass% or more. The proportion of tri-coordinated boron in B is preferably 8 mass% or more, and more preferably 10 mass% or more.

On the other hand, when the proportion of tri-coordinated boron in B is 70 mass% or more, reactivity becomes too high, decomposition of precipitates is promoted, and grains of an orientation other than the Goss orientation are likely to grow. As a result, magnetic characteristics are deteriorated. Therefore, the proportion of tri-coordinated boron in B is set to less than 70 mass%. The proportion of tri-coordinated boron in B is preferably 68 mass% or less, and more preferably 65 mass% or less. Incidentally, tri-coordinated boron is mainly contained in the above-described B-containing particles, but may be contained in MgO particles or Al-containing particles.

The proportion of tri-coordinated boron in B contained in the mixed powder is determined by the following method. Measurement is performed by nuclear magnetic resonance (NMR), and in the obtained spectrum, a peak within a range of 27 ppm or less and 6 ppm or more is defined as a peak of tri-coordinated boron, a peak within a range of less than 6 ppm and -6 ppm or more is defined as a peak of tetra-coordinated boron, and a value obtained by dividing an integration area of the peak of tri-coordinated boron by a total integration area of the integration area of the peak of tri-coordinated boron and an integration area of the peak of tetra-coordinated boron is defined as the proportion of tri-coordinated boron in B.

[Ratio of circumferential length to thickness of primary particles containing MgO is 6.0 or more]

A ratio of a circumferential length to a thickness of primary particles containing MgO is 6.0 or more. Since the MgO particles according to the present embodiment have a shape in which the ratio of a circumferential length to a thickness of primary particles containing MgO is 6.0 or more, when an annealing separator containing the mixed powder according to the present embodiment is applied to a sheet surface and dried, reactivity is improved while the annealing separator coats the sheet surface, and an effect of improving a coating property by application of boron is more easily exhibited. The ratio of a circumferential length to a thickness of primary particles containing MgO may be 8.0 or more or 9.1 or more. The ratio of a circumferential length to a thickness of primary particles containing MgO may be, for example, 11.5 or less or 11.2 or less.

The thickness of MgO primary particles is calculated by the following method. Before mixing, the MgO particles are used as a thickness calculation target, and after mixing, elemental analysis of Mg is performed by SEM (scanning electron microscope)-EDS (energy dispersive X-ray spectroscopy), and primary particles contained in secondary particles containing Mg in the largest amount identified from elemental mapping indicating a step of a concentration of Mg are used as a calculation target. The mixed powder or MgO particles before mixing are observed with SEM at a magnification of 10,000 times, and from the obtained secondary electron image, in the identified MgO particles, particles that are attached to a surface of the MgO secondary particles and whose profile is determined on the basis of the contrast, and that are not hidden by the profile of other particles are used as a calculation target of the thickness of the primary particles. By tracing the outline of the primary particles in the secondary electron image, a projection view with respect to a plane is obtained. Tracing is performed by determining the profile from the contrast of the secondary electron image using image analysis software ImageJ (development: NIH; National Institutes of Health). Here, a projection view is created for each of 20 primary particles. In the projection view, for each of the primary particles, a straight line passing through the centroid and having the shortest distance between two points intersecting the profile is drawn. A median distance between two points of each of 20 primary particles is defined as the thickness of MgO primary particles. Here, the centroid is obtained using a centroid measurement function in the image analysis software ImageJ in an image in which the profile is traced with a black line in the secondary electron image, the region surrounded by the profile is further painted black, and the outside of the primary particles is painted white. In addition, a median length of the profile of 20 primary particles is defined as the circumferential length. In the present embodiment, the circumferential length calculated in this manner is 6.0 times or more the thickness.

[Cl: 0.005 mass% or more and 0.030 mass% or less]

Cl (chlorine) is an element that enhances reactivity between $SiO_2$ formed on a surface of a steel sheet after decarburization annealing and the mixed powder. When the mixed powder according to the present embodiment contains 0.005 mass% or more of Cl, coating characteristics are further improved, which is preferable. A Cl content is more preferably 0.008 mass% or more.

On the other hand, when the Cl content is more than 0.030 mass%, desulfurization of a steel sheet may be caused due to the high sulfurization tendency. When the Cl content is 0.030 mass% or less, desulfurization can be sufficiently suppressed. Therefore, the Cl content is preferably 0.030 mass% or less. The Cl content is more preferably 0.022 mass% or less.

[0.02 mass% or more and 4.00 mass% or less in total of one or more selected from the group consisting of Ca, Sr, and Ba]

Ca (calcium), Sr (strontium), and Ba (barium) are elements that enhance the reactivity between $SiO_2$ and the mixed powder, similarly to Cl. Therefore, it is preferable that 0.02 mass% or more in total of one or more selected from the group consisting of Ca, Sr, and Ba be contained because the coating characteristics are further improved.

On the other hand, when a content in total of one or more selected from the group consisting of Ca, Sr, and Ba is more than 4.00 mass%, desulfurization of a steel sheet may be caused due to the high sulfurization tendency. When the content in total of one or more selected from the group consisting of Ca, Sr, and Ba is 4.00 mass% or less, desulfurization can be sufficiently suppressed. Therefore, the content in total of one or more selected from the group consisting of Ca, Sr, and Ba is preferably 4.00 mass% or less.

Ca may be contained in the mixed powder as a Ca compound. Examples of the Ca compound include calcium sulfate, hemihydrate gypsum, calcined gypsum, and gypsum. Sr may be contained in the mixed powder as a Sr compound. Examples of the Sr compound include strontium sulfate. Ba may be contained in the mixed powder as a Ba compound. Examples of the Ba compound include barium sulfate. Cl, Sr, and Ba may be contained in the mixed powder as particles mainly containing each of Cl, Sr, and Ba, or may be contained in the above-described particles constituting the mixed powder.

[Ti: 0.25 mass% or more and 5 mass% or less]

Ti (titanium) is an element that helps coating formation by maintaining the oxygen potential of a steel sheet by releasing oxygen at a high temperature of final annealing. When the mixed powder according to the present embodiment contains 0.25 mass% or more of Ti, the above effect can be obtained. A Ti content is more preferably 0.5 mass% or more.

On the other hand, when the Ti content is 5 mass% or less, deterioration of the magnetic characteristics due to excessive oxygen release can be suppressed. Therefore, the Ti content is preferably 5 mass% or less. The Ti content is more preferably 4 mass% or less.

Ti may be contained in the mixed powder as, for example, $TiO_2$, titanate, TiN, $TiB_2$, or $BaTiO_3$. Ti may be contained in the mixed powder as particles mainly containing each compound, or may be contained in the above-described particles constituting the mixed powder.

The contents of Cl, Ca, Sr, Ba, and Ti are quantitatively analyzed by ICP-MS by the method described above.

[Impurities]

Components other than the above in the mixed powder according to the present embodiment are MgO and impurities. Examples of the impurities include Al, Fe, and Si. When a content of each impurity element is 0.04 mass% or less, or 0.1 mass% or less in total, an influence on magnetic characteristics or coating characteristics of the grain-oriented electrical steel sheet is small.

$$[0.05 \leq [Ca]/[BO_3] < 2.00]$$

The mixed powder according to the present embodiment preferably contains Ca and satisfies the following formula (1).

$$0.05 \leq [Ca]/[BO_3] < 2.00... \quad \text{Formula (1)}$$

In formula (1), [Ca] is a Ca content (mass%) in the mixed powder, and $[BO_3]$ is a content (mass%) of the tri-coordinated boron in the mixed powder.

When $[Ca]/[BO_3]$ satisfies formula (1), an amount of tri-coordinated boron in $SiO_2$ is maintained by Ca, a decomposition rate of precipitates becomes constant, and magnetic characteristics are further improved. $[Ca]/[BO_3]$ is more preferably 0.10 or more, and still more preferably 0.15 or more. In addition, $[Ca]/[BO_3]$ is more preferably 0.40 or less, and still more preferably 0.30 or less.

The content $[BO_3]$ of tri-coordinated boron in the mixed powder is determined by multiplying the B content determined by ICP-MS by the proportion of tri-coordinated boron in B determined by the method described above.

<Method for manufacturing mixed powder>

The mixed powder according to the present embodiment described above is manufactured by baking a raw material powder containing Mg-containing raw material particles containing one or two or more selected from the group consisting of magnesium hydroxide ($Mg(OH)_2$), basic magnesium carbonate ($mMgCO_3 \cdot Mg(OH)_2 \cdot nH_2O$), and magnesium carbonate ($Mg(CO_3)$) in which a ratio of a circumferential length to a thickness of primary particles is 7.0 or more, and B-containing raw material particles containing B, in which an average particle size is 0.10 μm or more and 8.50 μm or less, at a temperature of 700°C or higher and 1100°C or lower.

In the Mg-containing raw material particles, a ratio of a circumferential length to a thickness of primary particles thereof is 7.0 or more. When the ratio of a circumferential length to a thickness of primary particles is 7.0 or more, the ratio of a circumferential length to a thickness of primary particles containing MgO becomes 6.0 or more in the mixed powder after baking. The ratio of a circumferential length to a thickness of primary particles of Mg-containing raw material particles may be 7.6 or more or 9.4 or more. The ratio of a circumferential length to a thickness of primary particles of Mg-containing raw material particles may be, for example, 24.0 or less or 20.0 or less. The ratio of a circumferential length to a thickness of primary particles of Mg-containing raw material particles is calculated by the same method as that for calculating the ratio of a circumferential length to a thickness of primary particles containing MgO described above.

The B-containing raw material particles contain B, BN, $B_2O_3$, $Na_2B_4O_7$, borax, and the like. The B-containing raw material particles contain, for example, 10 mass% or more of B.

Respective particle sizes of the Mg-containing raw material particles and the B-containing raw material particles constituting the raw material powder may be, for example, a particle size at which the average particle size of the mixed powder described above is obtained, or a particle size larger than the average particle size. When the particle size of the raw material powder is larger than the average particle size of the mixed powder, the particle size may be adjusted by a known method such as pulverizing or classifying a baked raw material powder. The respective particle sizes of the Mg-containing raw material particles and the B-containing raw material particles may be, for example, 0.05 $\mu$m or more, or 0.08 $\mu$m or more. In addition, the respective particle sizes of the Mg-containing raw material particles and the B-containing raw material particles may be, for example, 10.0 $\mu$m or less, or 8.0 $\mu$m or less.

In addition, the raw material powder may appropriately contain Cl, Ca, Sr, Ba, and Ti. When these elements are contained in the raw material powder, one or more of these elements may be contained in one particle.

For example, Ca is contained in Ca-containing raw material particles containing a Ca compound. Examples of the Ca compound include calcined gypsum, strontium sulfate, and barium sulfate. The Ca-containing raw material particles contain, for example, 10 mass% or more of Ca.

The B content in the raw material powder is preferably 0.005 mass% or more and 0.040 mass% or less. When the B content in the raw material powder is 0.005 mass% or more and 0.040 mass% or less, the B content in the manufactured MgO particles can be more reliably set to 0.005 mass% or more and 0.040 mass% or less. The B content is more preferably 0.006 mass% or more, and still more preferably 0.008 mass% or more. In addition, the B content is more preferably 0.035 mass% or less, and still more preferably 0.030 mass% or less. However, when the raw material powder contains a component that volatilizes by baking, the B content in the raw material powder is adjusted in consideration of the component amount. B is mainly contained in the B-containing raw material particles described above, but may be contained in other particles constituting the raw material powder, for example, Mg-containing raw material particles, Ti-containing particles, and the like.

The B content in the raw material powder is quantitatively analyzed by ICP-MS by the method described above.

The raw material powder are baked at a temperature of 700°C or higher and 1100°C or lower in an air atmosphere or a nitrogen atmosphere.

It is preferable that a baking atmosphere not be other than the air atmosphere or the nitrogen atmosphere because it is economically disadvantageous.

In addition, when a baking temperature is lower than 700°C, baking becomes insufficient. Therefore, the baking temperature is set to 700°C or higher. The baking temperature is preferably 750°C or higher, and more preferably 800°C or higher. On the other hand, by setting the baking temperature to 1100°C or lower, a proportion of tri-coordinated boron in the baked MgO particles can be increased without significantly changing the particle size while the chemical structure of the baked tri-coordinated boron is stabilized. Therefore, the baking temperature is set to 1100°C or lower. The baking temperature is preferably 1050°C or lower, and more preferably 1030°C or lower.

A baking time can be set to, for example, 5 minutes or more and 120 minutes or less. From the viewpoint of eliminating baking unevenness, the baking time is preferably 8 minutes or more, and more preferably 10 minutes or more. On the other hand, from the viewpoint of economic efficiency, the baking time is preferably 90 minutes or less, and more preferably 60 minutes or less.

The method for manufacturing a mixed powder has been described so far.

In the method for manufacturing a mixed powder described above, the aspect has been described in which the raw material powder contains the Mg-containing raw material particles, the B-containing raw material particles, and the Al-containing raw material particles on the premise that particles serving as an Mg source and particles serving as a B source are different from each other. However, the present invention is not limited to such an aspect, and the Mg-containing raw material particles serving as the Mg source may contain B so that the Mg-containing raw material particles serve as the B source, or may contain other elements. The B-containing raw material particles may contain other elements.

In addition, the mixed powder according to the present embodiment described above may be manufactured by mixing so that the average particle size is 0.10 $\mu$m or more and 8.50 $\mu$m or less, the mixed powder contains B, and the proportion of tri-coordinated boron in the B is 5 mass% or more and less than 70 mass%.

<MgO particles>

In MgO particles according to an embodiment of the present invention, an average particle size is 0.10 $\mu$m or more and 8.50 $\mu$m or less, a B content is 0.005 mass% or more and less than 0.040 mass%, a proportion of tri-coordinated boron in the B is 5 mass% or more and less than 70 mass%, and a ratio of a circumferential length to a thickness of primary particles containing MgO is 6.0 or more.

The above characteristics of the MgO particles according to the present embodiment are similar to the characteristics of the mixed powder described above, and thus detailed description thereof will be omitted here. However, the fact that the MgO particles contain the above components means that MgO particles constituting an MgO powder contain the above components, and that particles other than the MgO particles do not exist alone.

<Method for manufacturing MgO particles>

The MgO particles described above are manufactured by the following manufacturing method (I) or (II).

(I) A raw material powder containing Mg-containing raw material particles containing one or two or more selected from the group consisting of magnesium hydroxide, basic magnesium carbonate, and magnesium carbonate in which a ratio of a circumferential length to a thickness of primary particles is 7.0 or more, and B-containing particles containing B, in which an average particle size is 0.10 μm or more and 8.50 μm or less, is baked at a temperature of 700°C or higher and 1100°C or lower.

(II) Raw material particles containing B and containing one or two or more selected from the group consisting of magnesium hydroxide, basic magnesium carbonate, and magnesium carbonate in which an average particle size is 0.10 μm or more and 8.50 μm or less and a ratio of a circumferential length to a thickness of primary particles is 7.0 or more are baked at a temperature of 700°C or higher and 1100°C or lower.

Each manufacturing method will be described below.

[Manufacturing method (I)]

In manufacturing method (1), a raw material powder containing Mg-containing raw material particles containing one or two or more selected from the group consisting of magnesium hydroxide, basic magnesium carbonate, and magnesium carbonate in which a ratio of a circumferential length to a thickness of primary particles is 7.0 or more, and B-containing raw material particles containing B, in which an average particle size is 0.10 μm or more and 8.50 μm or less, is baked at a temperature of 700°C or higher and 1100°C or lower. When the raw material powder contains a component that volatilizes by baking, the B content is adjusted in consideration of the component amount. The present manufacturing method is basically the same as the method for manufacturing a mixed powder. However, the method for manufacturing a mixed powder described above is different from the present manufacturing method in that there is a case where an oxide or the like other than B and Al, which is not solid-dissolved or contained as an impurity in the MgO particles, is mixed and baked in the method for manufacturing a mixed powder described above.

[Manufacturing method (II)]

In manufacturing method (II), raw material particles containing B and containing one or two or more selected from the group consisting of magnesium hydroxide, basic magnesium carbonate, and magnesium carbonate in which an average particle size is 0.10 μm or more and 8.50 μm or less and a ratio of a circumferential length to a thickness of primary particles is 7.0 or more are baked at a temperature of 700°C or higher and 1100°C or lower. When the raw material powder contains a component that volatilizes by baking, the B content is adjusted in consideration of the component amount.

The raw material particles containing at least one of magnesium hydroxide, basic magnesium carbonate, and magnesium carbonate contain B. The B content is preferably 0.005 mass% or more and 0.040 mass% or less. When the B content in the raw material particles is 0.005 mass% or more and 0.040 mass% or less, the B content in the manufactured MgO particles can be more reliably set to 0.005 mass% or more and 0.040 mass% or less. The B content is more preferably 0.006 mass% or more, and still more preferably 0.008 mass% or more. In addition, the B content is more preferably 0.035 mass% or less, and still more preferably 0.030 mass% or less.

A content of tri-coordinated boron with respect to the B content in the raw material particles is preferably 5 mass% or more and 70 mass% or less. When the content of tri-coordinated boron with respect to the B content is within the above range, a content of tri-coordinated boron in the MgO particles after baking under the baking conditions described later is 5 mass% or more and less than 70 mass%.

Regarding the raw material particles, respective particle sizes of magnesium hydroxide, basic magnesium carbonate, and magnesium carbonate may be, for example, a particle size at which the average particle size of the MgO particles described above is obtained, or a particle size larger than the average particle size. When the particle size of the raw material particles is larger than the average particle size of the MgO particles, MgO particles obtained by baking by a known method may be pulverized or classified. The respective particle sizes of magnesium hydroxide, basic magnesium carbonate, and magnesium carbonate may be, for example, 0.05 μm or more, or 0.08 μm or more. In addition, the respective particle sizes of magnesium hydroxide, basic magnesium carbonate, and magnesium carbonate may be, for example, 10.0 μm or less, or 8.0 μm or less.

In the raw material particles, a ratio of a circumferential length to a thickness of primary particles thereof is 7.0 or more. When the ratio of a circumferential length to a thickness of primary particles is 7.0 or more, the ratio of a circumferential length to a thickness of primary particles of raw material particles becomes 6.0 or more in the mixed powder after baking. The ratio of a circumferential length to a thickness of primary particles of raw material particles may be 7.6 or more or 9.4 or more. The ratio of a circumferential length to a thickness of primary particles of raw material particles may be, for example, 20.0 or less or 15.0 or less. The ratio of a circumferential length to a thickness of primary particles of raw material particles is calculated by the same method as that for calculating the ratio of a circumferential length to a thickness of primary particles containing MgO described above.

The raw material particles are baked at a temperature of 700°C or higher and 1100°C or lower in an air atmosphere or a nitrogen atmosphere. The baking atmosphere, the baking temperature, and the baking time are the same as the baking conditions of the raw material particles described above, and thus the detailed description thereof will be omitted here.

<Method for manufacturing grain-oriented electrical steel sheet>

In a method for manufacturing a grain-oriented electrical steel sheet according to an embodiment of the present invention, a grain-oriented electrical steel sheet is manufactured using the MgO particles or mixed powder as an annealing separator. In the method for manufacturing a grain-oriented electrical steel sheet according to the present embodiment, it is possible to manufacture a grain-oriented electrical steel sheet according to a manufacturing method including, for example, a hot rolling step of hot-rolling a steel slab to obtain a hot band; a hot-band annealing step of annealing the hot band; a cold rolling step of cold-rolling the hot band after the hot-band annealing step to obtain a cold rolled sheet; a decarburization annealing step of performing decarburization annealing on the cold rolled sheet; and a final annealing step of applying an annealing separator containing the MgO particles or mixed powder to the cold rolled sheet after the decarburization annealing step, drying the cold rolled sheet, and then performing final annealing.

In the present embodiment, as the annealing separator applied before final annealing, an annealing separator obtained by mixing the mixed powder according to the present embodiment described above with water to form a slurry is used. When Ti is not contained in the mixed powder, Ti may be further mixed. By using this annealing separator, it is possible to manufacture a grain-oriented electrical steel sheet having excellent external appearance of a coating and excellent coating adhesion.

In the above manufacturing method, as for the chemical composition of the steel slab and the conditions of each step, known manufacturing conditions of a grain-oriented electrical steel sheet can be applied except for the annealing separator to be used.

Regarding the annealing separator, when a mixed powder obtained by mixing MgO particles and $TiO_2$ particles is mixed with water to form a slurry (when an aqueous slurry is formed), it is preferable that the mixing be performed so that a proportion of $TiO_2$ is 0.5 to 8.5% in terms of Ti content when the mass of the mixed powder is 100%. Examples

Next, Examples of the present invention will be described, but conditions in Examples are examples of conditions adopted to confirm the feasibility and effects of the present invention, and the present invention is not limited to the conditions used in the following Examples. The present invention can adopt various conditions as long as the object of the present invention is achieved without departing from the gist of the present invention.

<Example 1>

Grain-oriented electrical steel sheets were produced using MgO particles or mixed powders of MgO particles and $TiO_2$ particles shown in Table 1A. Specifically, an aqueous slurry of an annealing separator containing MgO particles or a mixed powder of Table 1A was applied to a cold-rolled steel sheet after primary recrystallization annealing. The aqueous slurry was prepared by mixing an MgO powder or a mixed powder of Table 1A with water. The solid content (MgO particles or mixed powder) in the aqueous slurry was set to 20 mass%. The cold-rolled steel sheet having a surface coated with the aqueous slurry was subjected to baking treatment at 300°C for 30 seconds in any test number, and the aqueous slurry was dried to bake the solid content. After baking, final annealing treatment was performed. In the final annealing treatment, the steel sheet was held at 1200°C for 20 hours in Examples of any test number. By the above manufacturing steps, a grain-oriented electrical steel sheet having a longitudinal direction length of 300 mm, a sheet width direction length of 60 mm, and a sheet thickness of 0.23 mm and including a base steel sheet and a glass coating containing a composite oxide such as forsterite ($Mg_2SiO_4$) was manufactured. The "$BO_3$ ratio" shown in Table 1A indicates the proportion of tri-coordinated boron in B.

EP 4 582 584 A1

[Table 1A]

| No. | MgO particles | | | | | | TiO₂ particles | Mixed powder | | | | |
|---|---|---|---|---|---|---|---|---|---|---|---|---|
| | Blending ratio | Circumferential length/thickness | Chemical component (remainder is Mg, O, and impurities) | | | | Blending ratio | Chemical component (remainder is Mg, O, and impurities) | | | | |
| | | | B | Ca | BO₃ ratio | [Ca]/[BO₃] | | B | Ca | Ti | BO₃ ratio | [Ca]/[BO₃] |
| | mass% | | mass% | mass% | mass% | | mass% | mass% | mass% | mass% | mass% | |
| 1 | 100 | 6.2 | 0.020 | 0.040 | 72 | 2.78 | 0 | 0.020 | 0.040 | 0.00 | 72 | 2.78 |
| 2 | 100 | 8.0 | 0.020 | 0.040 | 72 | 2.78 | 0 | 0.020 | 0.040 | 0.00 | 72 | 2.78 |
| 3 | 100 | 9.1 | 0.020 | 0.040 | 69 | 2.90 | 0 | 0.020 | 0.040 | 0.00 | 69 | 2.90 |
| 4 | 100 | 9.5 | 0.020 | 0.040 | 68 | 2.94 | 0 | 0.020 | 0.040 | 0.00 | 68 | 2.94 |
| 5 | 100 | 11.2 | 0.020 | 0.040 | 68 | 2.94 | 0 | 0.020 | 0.040 | 0.00 | 68 | 2.94 |
| 6 | 100 | 11.5 | 0.004 | 0.020 | 68 | 7.35 | 0 | 0.004 | 0.020 | 0.00 | 68 | 7.35 |
| 7 | 100 | 11.2 | 0.045 | 0.020 | 62 | 0.72 | 0 | 0.045 | 0.020 | 0.00 | 62 | 0.72 |
| 8 | 100 | 11.2 | 0.020 | 0.020 | 55 | 1.82 | 0 | 0.020 | 0.020 | 0.00 | 55 | 1.82 |
| 9 | 100 | 11.2 | 0.020 | 0.010 | 55 | 0.91 | 0 | 0.020 | 0.010 | 0.00 | 55 | 0.91 |
| 10 | 100 | 11.2 | 0.030 | 0.003 | 53 | 0.19 | 0 | 0.030 | 0.003 | 0.00 | 53 | 0.19 |
| 11 | 95 | 11.2 | 0.030 | 0.003 | 53 | 0.19 | 5 | 0.029 | 0.003 | 2.97 | 53 | 0.19 |
| 12 | 93 | 11.2 | 0.030 | 0.003 | 53 | 0.19 | 7 | 0.028 | 0.003 | 4.16 | 53 | 0.19 |
| 13 | 100 | 11.2 | 0.020 | 0.020 | 72 | 1.39 | 0 | 0.020 | 0.020 | 0.00 | 72 | 1.39 |
| 14 | 100 | 11.2 | 0.020 | 0.020 | 4 | 25.00 | 0 | 0.020 | 0.020 | 0.00 | 4 | 25.00 |
| 15 | 100 | 5.8 | 0.020 | 0.040 | 69 | 2.90 | 0 | 0.020 | 0.040 | 0.00 | 69 | 2.90 |

The thickness of MgO primary particles was measured by the following method. A secondary electron image of a mixed powder was obtained at a magnification of 10,000 times with SEM, and MgO particles were identified from the obtained secondary electron image by the following method. That is, elemental analysis of Mg was performed by SEM-EDS, and secondary particles containing Mg in the largest amount identified from elemental mapping indicating a step of a concentration of Mg were used as MgO particles to be calculated. Furthermore, from the obtained secondary electron image, in the identified MgO particles, particles that were attached to a surface of the MgO secondary particles and whose profile was determined on the basis of the contrast, and that were not hidden by the profile of other particles were determined as the primary particles. The outline of the primary particles in the secondary electron image was traced using ImageJ, and a projection view with respect to a plane was obtained. A projection view was created for 20 primary particles, and in the created projection view, for each of the primary particles, a straight line passing through the centroid and having the shortest distance between two points intersecting the profile was drawn. A median distance between two points of 20 primary particles was defined as the thickness of MgO primary particles. In addition, a median length of the profile of 20 primary particles was defined as the circumferential length. From the calculated thickness and circumferential length, a ratio of a circumferential length to a thickness of primary particles of MgO particles was calculated. The circumferential length/thickness in Table 1A indicates the ratio of a circumferential length to a thickness of primary particles of MgO particles.

The B content and the Ca content in the MgO particles and the mixed powder were measured using inductively coupled plasma mass spectrometry (ICP-MS). Specifically, a solution obtained by dissolving the MgO particles or the mixed powder in a mixed acid of hydrochloric acid and nitric acid was used. When a residue remained, the residue was recovered and dissolved in an alkaline solution to perform analysis. In addition, the proportion of tri-coordinated boron in B was determined by the following method. Measurement was performed by NMR, and in the obtained spectrum, a peak within a range of 27 ppm or less and 6 ppm or more was defined as tri-coordinated boron, a peak within a range of less than 6 ppm and -6 ppm or more was defined as tetra-coordinated boron, and a value obtained by dividing an integration area of the peak of tri-coordinated boron by a total integration area of the integration area of the peak of tri-coordinated boron and an integration area of the peak of tetra-coordinated boron was defined as the proportion of tri-coordinated boron in B. The $BO_3$ content [$BO_3$] in the MgO particles and the mixed powder was determined by multiplying the B content determined by ICP-MS by the proportion of tri-coordinated boron in B.

A particle size distribution of a volume frequency of the MgO particles and the mixed powder was measured with a laser diffraction particle size distribution measuring apparatus (LA-920 manufactured by HORIBA, Ltd.), and an average particle size in an equivalent circle diameter was defined as the average particle size of the MgO particles and the mixed powder. The measurement conditions were conditions in which a refractive index was set to 1.74 and dispersion treatment by ultrasonic waves in pure water was performed.

Magnetic characteristics (B8), external appearance, coating adhesion, and magnetic characteristics deterioration amount ∆B8 of the obtained grain-oriented electrical steel sheets were evaluated in the following manner.

[Magnetic characteristics]

Magnetic characteristics of each grain-oriented electrical steel sheet were evaluated by the following method.
Specifically, a magnetic field of 800 A/m was applied to a sample having a rolling direction length of 300 mm $\times$ a width of 60 mm to obtain a magnetic flux density B8. When B8 was 1.920 T or more, it was determined that the magnetic characteristics were good.

[External appearance]

A color tone was evaluated for a sample of each grain-oriented electrical steel sheet, and then a known insulating coating was formed to evaluate coating defects. When the color tone of a primary layer of each grain-oriented electrical steel sheet before formation of the insulating coating was uniform and there was no coating defect (hole and rusting) after formation of the insulating coating, it was determined that the external appearance was excellent. Specifically, evaluation was performed as follows.

A: The color tone before formation of the insulating coating was uniform, and the maximum area of coating defects after formation of the insulating coating was less than 2 mm$^2$.
B: The color tone before formation of the insulating coating was uniform, and the maximum area of coating defects after formation of the insulating coating was 2 to 4 mm$^2$.
C: Color unevenness was observed in the color tone before formation of the insulating coating, or the maximum area of coating defects after formation of the insulating coating was more than 4 mm$^2$.

A or B was determined to be acceptable in the evaluation.

[Coating adhesion]

Coating adhesion of each grain-oriented electrical steel sheet was evaluated by the following method. That is, a sample having a rolling direction length of 50 mm and a width of 10 mm was collected from the sample after formation of the insulating coating, and in the case where the sample was wound along a cylinder having a diameter of 20 mm, bent by half the circumference, and bent back, no coating peeling was observed and the sample was determined to have excellent adhesion. Specifically, evaluation was performed as follows.

A: Peeling was not observed.
B: Dot-shaped or island-shaped coating peeling that was less than the total length of the bent portion or the total length in the sample width direction was observed.
C: Coating peeling over the total length of the bent portion or the total length in the width direction was observed.

A was determined to be acceptable in the evaluation.

[Magnetic characteristics deterioration amount $\Delta$B8]

Magnetic characteristics deterioration amount $\Delta$B8 of each grain-oriented electrical steel sheet was evaluated by the following method. That is, after the magnetic flux density B8 was evaluated by the above-described method, the primary layer of the sample was removed with each of alkali and acid, and then a magnetic field of 800 A/m was applied again to obtain a magnetic flux density B8'. Here, AB8 was obtained by the formula $\Delta$B8 = B8' - B8.
The case where magnetic characteristics deterioration amount $\Delta$B8 was 0.020 T or less was determined to be good.
The results are shown in Table 1B.

[Table 1B]

| No. | Average particle size [μm] | Grain-oriented electrical steel sheet | | | | Remarks |
|---|---|---|---|---|---|---|
| | | B8 [T] | External appearance | Coating adhesion | B8 deterioration due to coating $\Delta$B8 | |
| 1 | 0.05 | 1.915 | C | C | 0.013 | Comparative Example |
| 2 | 8.80 | 1.911 | C | C | 0.014 | Comparative Example |
| 3 | 0.20 | 1.923 | A | A | 0.016 | Inventive Example |
| 4 | 1.50 | 1.925 | A | A | 0.016 | Inventive Example |
| 5 | 4.80 | 1.930 | A | A | 0.018 | Inventive Example |
| 6 | 1.50 | 1.930 | B | C | 0.014 | Comparative Example |
| 7 | 1.50 | 1.922 | B | A | 0.022 | Comparative Example |
| 8 | 0.20 | 1.925 | A | A | 0.014 | Inventive Example |
| 9 | 1.50 | 1.933 | A | A | 0.013 | Inventive Example |
| 10 | 3.20 | 1.929 | A | A | 0.014 | Inventive Example |
| 11 | 5.90 | 1.925 | A | A | 0.014 | Inventive Example |
| 12 | 8.20 | 1.925 | A | A | 0.016 | Inventive Example |
| 13 | 1.50 | 1.930 | C | A | 0.015 | Comparative Example |
| 14 | 1.50 | 1.922 | A | A | 0.022 | Comparative Example |
| 15 | 0.20 | 1.923 | A | B | 0.016 | Comparative Example |

In example No. 1, since the proportion of tri-coordinated boron in B was excessive and the average particle size of the MgO particles was too small, the coating was non-uniform, and B8, the external appearance, and the coating adhesion of the grain-oriented electrical steel sheet were poor.
In example No. 2, since the proportion of tri-coordinated boron in B was excessive and the average particle size of the MgO particles was extremely large, the coating was non-uniform, and B8, the external appearance, and the coating adhesion of the grain-oriented electrical steel sheet were poor.

In example No. 6, since the B content was excessively low, the coating adhesion was poor.

In example No. 7, since the B content was excessive, the magnetic characteristics deterioration amount $\Delta B8$ was poor.

In example No. 13, the proportion of tri-coordinated boron was excessive, and the external appearance was poor.

In example No. 14, the proportion of tri-coordinated boron was excessively small, and the magnetic characteristics deterioration amount $\Delta B8$ was poor.

In example No. 15, the ratio of a circumferential length to a thickness of MgO primary particles was excessively small, and the coating adhesion was poor.

In example Nos. 3 to 5 and 8 to 12, the average particle size was 0.10 $\mu$m or more and 8.50 $\mu$m or less, the B content was 0.005 mass% or more and less than 0.040 mass%, the proportion of tri-coordinated boron in B was 5 mass% or more and less than 70 mass%, and the ratio of a circumferential length to a thickness of primary particles containing MgO was 6.0 or more, and a grain-oriented electrical steel sheet having excellent B8, external appearance, coating adhesion, and magnetic characteristics deterioration amount $\Delta B8$ was obtained. In particular, in example Nos. 8 to 11, the $[Ca]/[BO_3]$ value was within a range of 0.05 or more and less than 2.00, the magnetic characteristics deterioration amount $\Delta B8$ was small, and good magnetic characteristics were obtained.

<Example 2>

Grain-oriented electrical steel sheets were manufactured using a mixed powder shown in Table 2B containing MgO particles, B-containing particles, and $TiO_2$ particles at blending ratios shown in Table 2A. Specifically, an aqueous slurry of an annealing separator containing a mixed powder of Table 2B was applied to a cold-rolled steel sheet after primary recrystallization annealing. The aqueous slurry was prepared by mixing a mixed powder of Table 2B with water. The solid content (mixed powder) in the aqueous slurry was set to 20 mass%. The cold-rolled steel sheet having a surface coated with the aqueous slurry was subjected to baking treatment at 300°C for 30 seconds in any example, and the aqueous slurry was dried to bake the solid content. After baking, final annealing treatment was performed. In the final annealing treatment, the steel sheet was held at 1200°C for 20 hours in any example. By the above manufacturing steps, a grain-oriented electrical steel sheet having a longitudinal direction length of 60 mm, a sheet width direction length of 300 mm, and a sheet thickness of 0.23 mm and including a base steel sheet and a glass coating containing a composite oxide such as forsterite ($Mg_2SiO_4$) was manufactured.

[Table 2A]

| No. | MgO particles | | | | | | B-containing particles | | | | | TiO$_2$ particles |
| | Blending ratio | Circumferential length/thickness | Chemical component (remainder is Mg, O, and impurities) | | | | Type | Blending ratio | Boron | | | Blending ratio |
| | | | B | Ca | BO$_3$ ratio | [Ca]/[BO$_3$] | | | Concentration | BO$_3$ ratio | | |
| | mass% | | mass% | mass% | mass% | | | mass% | mass% | mass% | mass% |
|---|---|---|---|---|---|---|---|---|---|---|---|
| 16 | 99.920 | 7.5 | 0.020 | 0.003 | 8.0 | 1.88 | Na$_2$B$_4$O$_7$ | 0.080 | 21.493 | 0.2 | 0.000 |
| 17 | 99.960 | 7.5 | 0.020 | 0.040 | 68.0 | 2.94 | Na$_2$B$_4$O$_7$ | 0.040 | 21.493 | 95.0 | 0.000 |
| 18 | 99.900 | 7.5 | 0.020 | 0.003 | 60.0 | 0.25 | Na$_2$B$_4$O$_7$ | 0.100 | 21.493 | 60.0 | 0.000 |
| 19 | 99.990 | 7.5 | 0.002 | 0.020 | 60.0 | 16.67 | Na$_2$B$_4$O$_7$ | 0.010 | 21.493 | 60.0 | 0.000 |
| 20 | 99.960 | 7.5 | 0.020 | 0.005 | 8.0 | 3.13 | Na$_2$B$_4$O$_7$ | 0.040 | 21.493 | 0.2 | 0.000 |
| 21 | 99.995 | 7.5 | 0.020 | 0.042 | 68.0 | 3.09 | Na$_2$B$_4$O$_7$ | 0.005 | 21.493 | 95.0 | 0.000 |
| 22 | 99.960 | 7.5 | 0.020 | 0.001 | 4.0 | 1.25 | Na$_2$B$_4$O$_7$ | 0.040 | 21.493 | 55.0 | 0.000 |
| 23 | 99.995 | 7.5 | 0.020 | 0.020 | 72.0 | 1.39 | Na$_2$B$_4$O$_7$ | 0.005 | 21.493 | 4.0 | 0.000 |
| 24 | 94.960 | 7.5 | 0.020 | 0.001 | 55.0 | 0.09 | Na$_2$B$_4$O$_7$ | 0.040 | 21.493 | 28.0 | 5.000 |
| 25 | 94.995 | 7.5 | 0.020 | 0.020 | 55.0 | 1.82 | Na$_2$B$_4$O$_7$ | 0.005 | 21.493 | 28.0 | 5.000 |
| 26 | 94.960 | 7.5 | 0.020 | 0.030 | 40.0 | 3.75 | B$_2$O$_3$ | 0.040 | 31.034 | 30.0 | 5.000 |
| 27 | 94.990 | 7.5 | 0.020 | 0.030 | 40.0 | 3.75 | B | 0.010 | 100.00 | 30.0 | 5.000 |
| 28 | 99.960 | 7.5 | 0.020 | 0.001 | 4.0 | 1.25 | Na$_2$B$_4$O$_7$ | 0.040 | 21.493 | 55.0 | 0.000 |
| 29 | 99.960 | 7.5 | 0.020 | 0.001 | 4.0 | 1.25 | Na$_2$B$_4$O$_7$ | 0.040 | 21.493 | 55.0 | 0.000 |

[Table 2B]

| No. | Average particle size | Mixed powder | | | | | Grain-oriented electrical steel sheet | | | | Remarks |
|---|---|---|---|---|---|---|---|---|---|---|---|
| | | Chemical component (remainder is Mg, O, and impurities) | | | | | B8 [T] | External appearance | Coating adhesion | B8 deterioration due to coating $\Delta$B8 | |
| | | B | Ca | Ti | $BO_3$ ratio | $[Ca]/[BO_3]$ | | | | | |
| | [$\mu$m] | mass% | mass% | mass% | mass% | | | | | | |
| 16 | 1.50 | 0.037 | 0.003 | 0.000 | 4 | 1.84 | 1.924 | A | A | 0.022 | Comparative Example |
| 17 | 1.50 | 0.029 | 0.040 | 0.000 | 76 | 1.84 | 1.931 | A | A | 0.021 | Comparative Example |
| 18 | 1.50 | 0.041 | 0.003 | 0.000 | 60 | 0.12 | 1.926 | B | A | 0.028 | Comparative Example |
| 19 | 1.50 | 0.004 | 0.020 | 0.000 | 60 | 8.03 | 1.930 | B | C | 0.014 | Comparative Example |
| 20 | 1.50 | 0.029 | 0.005 | 0.000 | 6 | 3.09 | 1.923 | A | A | 0.016 | Inventive Example |
| 21 | 1.50 | 0.021 | 0.042 | 0.000 | 69 | 2.87 | 1.922 | A | A | 0.015 | Inventive Example |
| 22 | 1.50 | 0.029 | 0.001 | 0.000 | 19 | 0.18 | 1.924 | A | A | 0.014 | Inventive Example |
| 23 | 1.50 | 0.021 | 0.020 | 0.000 | 69 | 1.38 | 1.932 | A | A | 0.013 | Inventive Example |
| 24 | 1.50 | 0.028 | 0.001 | 2.975 | 47 | 0.07 | 1.925 | A | A | 0.013 | Inventive Example |
| 25 | 1.50 | 0.020 | 0.019 | 2.975 | 54 | 1.77 | 1.926 | A | A | 0.014 | Inventive Example |
| 26 | 1.50 | 0.031 | 0.028 | 2.975 | 36 | 2.52 | 1.923 | A | A | 0.014 | Inventive Example |
| 27 | 1.50 | 0.029 | 0.028 | 2.975 | 37 | 2.69 | 1.924 | A | A | 0.014 | Inventive Example |
| 28 | 0.30 | 0.029 | 0.001 | 0.000 | 19 | 0.18 | 1.923 | A | A | 0.018 | Inventive Example |
| 29 | 8.40 | 0.029 | 0.001 | 0.000 | 19 | 0.18 | 1.931 | A | A | 0.012 | Inventive Example |

The B content, the Ca content, the Ti content, the $BO_3$ content, the proportion of tri-coordinated boron in B ($BO_3$ ratio), the average particle size, and the ratio of a circumferential length to a thickness of primary particles of MgO particles in the mixed powder were measured in the same manner as in Example 1. In addition, magnetic characteristics (B8), external appearance, coating adhesion, and magnetic characteristics deterioration amount $\Delta$B8 of the obtained grain-oriented electrical steel sheets were evaluated in the same manner as in Example 1. The results are shown in Table 2B.

In example No. 16, since the proportion of tri-coordinated boron in B was excessively small, formation of an Al oxide in the coating was promoted, so that an influence of deterioration of magnetic characteristics of the coating was increased, and the magnetic characteristics deterioration amount $\Delta$B8 was poor.

In example No. 17, since the proportion of tri-coordinated boron in B was excessive, formation in the coating was excessively promoted, an influence of deterioration of magnetic characteristics of the coating was increased, and the magnetic characteristics deterioration amount $\Delta$B8 was poor.

In example No. 18, since the B content in the mixed powder was excessive, the magnetic characteristics deterioration amount $\Delta$B8 was poor.

In example No. 19, since the B content in the mixed powder was excessively low, the coating adhesion was poor.

In example Nos. 20 to 29, the average particle size was 0.10 $\mu$m or more and 8.50 $\mu$m or less, the mixed powder contained B, the B content contained in the entire mixed powder was 0.005 mass% or more and less than 0.040 mass%, the proportion of tri-coordinated boron in B was 5 mass% or more and less than 70 mass%, and the ratio of a circumferential length to a thickness of primary particles containing MgO was 6.0 or more, and a grain-oriented electrical steel sheet having excellent B8, external appearance, coating adhesion, and magnetic characteristics deterioration amount $\Delta$B8 was obtained.

<Example 3>

Grain-oriented electrical steel sheets were manufactured using a mixed powder shown in Table 3B containing MgO particles, B-containing particles, Ca-containing particles, and $TiO_2$ particles shown in Table 3A, with the other conditions being the same as in Example 2. Specifically, an aqueous slurry of an annealing separator containing a mixed powder of Table 3B was applied to a cold-rolled steel sheet after primary recrystallization annealing. The aqueous slurry was prepared by mixing a mixed powder of Table 3B with water. The solid content (mixed powder) in the aqueous slurry was set to 20 mass%. The cold-rolled steel sheet having a surface coated with the aqueous slurry was subjected to baking treatment at 300°C for 30 seconds in any example, and the aqueous slurry was dried to bake the solid content. After baking, final annealing treatment was performed. In the final annealing treatment, the steel sheet was held at 1200°C for 20 hours in any example. By the above manufacturing steps, a grain-oriented electrical steel sheet having a longitudinal direction length of 300 mm, a sheet width direction length of 60 mm, and a sheet thickness of 0.23 mm and including a base steel sheet and a glass coating containing a composite oxide such as forsterite ($Mg_2SiO_4$) was manufactured.

[Table 3A]

| No. | MgO particles | | | | | | B-containing particles | | | | Ca-containing particles | | | TiO$_2$ particles |
| | Blending ratio | Circumferential length/thickness | Chemical component (remainder is Mg, O, and impurities) | | | Type | Blending ratio | Boron | | Type | Blending ratio | Ca concentration | Blending ratio |
| | | | B | Ca | BO$_3$ ratio | | | Concentration | BO$_3$ ratio | | | | |
| | mass% | | mass% | mass% | mass% | | mass% | mass% | mass% | | mass% | mass% | mass% |
| 30 | 99.993 | 8.3 | 0.020 | 0.022 | 68 | Na$_2$B$_4$O$_7$ | 0.005 | 21.493 | 95 | CaSO$_4$ | 0.002 | 29.45 | 0.000 |
| 31 | 99.945 | 8.3 | 0.020 | 0.020 | 68 | Na$_2$B$_4$O$_7$ | 0.005 | 21.493 | 95 | CaSO$_4$ | 0.027 | 29.45 | 0.000 |
| 32 | 99.880 | 8.3 | 0.020 | 0.001 | 22 | Na$_2$B$_4$O$_7$ | 0.040 | 21.493 | 72 | CaSO$_4$ | 0.200 | 29.45 | 0.000 |
| 33 | 97.995 | 8.3 | 0.020 | 0.020 | 72 | Na$_2$B$_4$O$_7$ | 0.005 | 21.493 | 4 | CaSO$_4$ | 2.000 | 29.45 | 0.000 |
| 34 | 99.720 | 8.3 | 0.020 | 0.001 | 22 | Na$_2$B$_4$O$_7$ | 0.200 | 21.493 | 72 | CaSO$_4$ | 0.080 | 29.45 | 0.000 |
| 35 | 99.910 | 8.3 | 0.020 | 0.042 | 68 | Na$_2$B$_4$O$_7$ | 0.040 | 21.493 | 72 | SrSO$_4$ | 0.050 | 47.72 | 0.000 |
| 36 | 99.975 | 8.3 | 0.020 | 0.001 | 22 | Na$_2$B$_4$O$_7$ | 0.005 | 21.493 | 4 | BaSO$_4$ | 0.020 | 58.80 | 0.000 |

EP 4 582 584 A1

[Table 3B]

| No. | Mixed powder | | | | | | Grain-oriented electrical steel sheet | | | | Remarks |
|---|---|---|---|---|---|---|---|---|---|---|---|
| | Average particle size [μm] | Chemical component (remainder is Mg, O, and impurities) | | | | | $B_8$ [T] | External appearance | Coating adhesion | $B_8$ deterioration due to coating $\Delta B_8$ | |
| | | B mass% | Ca mass% | Ti mass% | $BO_3$ ratio mass% | $[Ca]/[BO_3]$ | | | | | |
| 30 | 1.50 | 0.021 | 0.023 | 0.000 | 69 | 1.55 | 1.922 | A | A | 0.014 | Inventive Example |
| 31 | 1.50 | 0.021 | 0.028 | 0.000 | 69 | 1.91 | 1.922 | A | A | 0.014 | Inventive Example |
| 32 | 1.50 | 0.029 | 0.060 | 0.000 | 37 | 5.66 | 1.924 | A | A | 0.016 | Inventive Example |
| 33 | 1.50 | 0.021 | 0.609 | 0.000 | 69 | 42.2 | 1.932 | A | A | 0.018 | Inventive Example |
| 34 | 1.50 | 0.063 | 0.025 | 0.000 | 56 | 0.69 | 1.924 | B | A | 0.025 | Comparative Example |
| 35 | 1.50 | 0.029 | 0.066 | 0.000 | 69 | 3.33 | 1.925 | A | A | 0.015 | Inventive Example |
| 36 | 1.50 | 0.021 | 0.013 | 0.000 | 21 | 2.87 | 1.933 | A | A | 0.015 | Inventive Example |

The B content, the Ca content, the Ti content, the $BO_3$ content, the proportion of tri-coordinated boron in B ($BO_3$ ratio), the average particle size, and the ratio of a circumferential length to a thickness of primary particles of MgO particles in the mixed powder were measured in the same manner as in Example 1. In addition, magnetic characteristics (B8), external appearance, coating adhesion, and magnetic characteristics deterioration amount $\Delta$B8 of the obtained grain-oriented electrical steel sheets were evaluated in the same manner as in Example 1. The results are shown in Table 3B.

In example Nos. 30 to 33, 35, and 36, the average particle size was 0.10 $\mu$m or more and 8.50 $\mu$m or less, the mixed powder contained B, the B content contained in the entire mixed powder was 0.005 mass% or more and less than 0.040 mass%, the proportion of tri-coordinated boron in B was 5 mass% or more and less than 70 mass%, and the ratio of a circumferential length to a thickness of MgO primary particles was 6.0 or more, and a grain-oriented electrical steel sheet having excellent B8, external appearance, coating adhesion, and magnetic characteristics deterioration amount $\Delta$B8 was obtained. In particular, in example Nos. 30 and 31, the [Ca]/[$BO_3$] value was within a range of 0.05 or more and less than 2.00, the magnetic characteristics deterioration amount $\Delta$B8 was small, and good magnetic characteristics were obtained.

In example No. 34, the B content in the mixed powder was more than 0.040%, and the magnetic characteristics deterioration amount $\Delta$B8 of the grain-oriented electrical steel sheet manufactured using the mixed powder was poor.

<Example 4>

Raw material particles or raw material powders shown in Table 4A were baked under conditions shown in Table 4B to produce MgO particles or mixed powders. Using the produced MgO particles or mixed powders, grain-oriented electrical steel sheets were manufactured in the same manner as in Example 1.

The B content, the Ca content, the Ti content, the $BO_3$ content, and the proportion of tri-coordinated boron in B ($BO_3$ ratio), the average particle size, the ratio of a circumferential length to a thickness of primary particles of Mg-containing raw material particles in the raw material particles or the raw material powder and the MgO particles or the mixed powder, and the ratio of a circumferential length to a thickness of primary particles of MgO particles in the MgO particles or the mixed powder were measured in the same manner as in Example 1. In addition, magnetic characteristics (B8), external appearance, coating adhesion, and magnetic characteristics deterioration amount $\Delta$B8 of the obtained grain-oriented electrical steel sheets were evaluated in the same manner as in Example 1. The results are shown in Table 4B.

| No. | Mg-containing raw material particles | | | | | B-containing raw material particles | | | Ca-containing raw material particles | | | TiO₂ particles | B content | Ca content | Average particle size |
|---|---|---|---|---|---|---|---|---|---|---|---|---|---|---|---|
| | Raw material type | Circumferential length/thickness | Content | | Blending ratio | Type | Blending ratio | B | Type | Blending ratio | Ca | Blending ratio | | | |
| | | | B | Ca | | | | | | | | | | | |
| | | | mass% | mass% | mass% | | mass% | mass% | | mass% | mass% | mass% | mass% | mass% | μm |
| 37 | Mg (OH)₂ | 7.6 | 0.001 | 0.005 | 100.000 | | | | | | | 0.000 | 0.001 | 0.005 | 3.20 |
| 38 | Mg (OH)₂ | 7.6 | 0.080 | 0.005 | 100.000 | | | | | | | 0.000 | 0.080 | 0.005 | 3.20 |
| 39 | Mg (OH)₂ | 7.6 | 0.001 | 0.005 | 99.985 | Na₂B₄O₇ | 0.015 | 21.49 | | | | 0.000 | 0.004 | 0.005 | 3.20 |
| 40 | Mg (OH)₂ | 7.6 | 0.002 | 0.005 | 99.800 | Na₂B₄O₇ | 0.200 | 21.49 | | | | 0.000 | 0.045 | 0.005 | 3.20 |
| 41 | Mg (OH)₂ | 7.6 | 0.022 | 0.030 | 100.000 | | | | | | | 0.000 | 0.022 | 0.030 | 3.20 |
| 42 | Mg (OH)₂ | 7.6 | 0.032 | 0.050 | 99.950 | Na₂B₄O₇ | 0.050 | 21.49 | | | | 0.000 | 0.043 | 0.050 | 3.20 |
| 43 | Mg (OH)₂ | 7.6 | 0.038 | 0.005 | 99.980 | | | | CaSO₄ | 0.020 | 29.45 | 0.000 | 0.038 | 0.011 | 3.20 |
| 44 | Mg (OH)₂ | 7.6 | 0.020 | 0.008 | 94.990 | | | | CaSO₄ | 0.010 | 29.45 | 5.000 | 0.019 | 0.011 | 3.20 |
| 45 | Mg (OH)₂ | 9.4 | 0.005 | 0.004 | 94.948 | Na₂B₄O₇ | 0.050 | 21.49 | CaSO₄ | 0.002 | 29.45 | 5.000 | 0.015 | 0.004 | 3.20 |
| 46 | Mg (OH)₂ | 9.4 | 0.005 | 0.004 | 94.948 | Na₂B₄O₇ | 0.050 | 21.49 | CaSO₄ | 0.002 | 29.45 | 5.000 | 0.015 | 0.004 | 3.20 |
| 47 | Mg (OH)₂ | 9.4 | 0.005 | 0.004 | 94.948 | Na₂B₄O₇ | 0.050 | 21.49 | CaSO₄ | 0.002 | 29.45 | 5.000 | 0.015 | 0.004 | 3.20 |
| 48 | Mg (OH)₂ | 9.4 | 0.020 | 0.008 | 94.948 | Na₂B₄O₇ | 0.050 | 21.49 | CaSO₄ | 0.002 | 29.45 | 5.000 | 0.030 | 0.008 | 3.20 |
| 49 | Mg (OH)₂ | 9.4 | 0.020 | 0.008 | 94.948 | Na₂B₄O₇ | 0.050 | 21.49 | CaSO₄ | 0.002 | 29.45 | 5.000 | 0.030 | 0.008 | 3.20 |
| 50 | Mg (OH)₂ | 9.4 | 0.020 | 0.008 | 94.948 | Na₂B₄O₇ | 0.050 | 21.49 | CaSO₄ | 0.002 | 29.45 | 5.000 | 0.030 | 0.008 | 3.20 |
| 51 | MgCO₃ | 7.2 | 0.025 | 0.010 | 100.000 | | | | | | | 0.000 | 0.025 | 0.010 | 3.20 |
| 52 | mMgCO₃·Mg (OH)₂·nH₂O | 7.1 | 0.025 | 0.010 | 99.950 | Na₂B₄O₇ | 0.050 | 21.49 | | | | 0.000 | 0.036 | 0.010 | 3.20 |
| 53 | MgCO₃ + mMgCO₃·Mg (OH)₂· nH₂O + Mg (OH)₂ | 7.1 | 0.025 | 0.010 | 94.998 | | | | CaSO₄ | 0.002 | 29.45 | 5.000 | 0.024 | 0.010 | 3.20 |
| 54 | Mg (OH)₂ | 6.8 | 0.032 | 0.050 | 99.950 | Na₂B₄O₇ | 0.050 | 21.49 | | | | 0.000 | 0.043 | 0.050 | 3.20 |

EP 4 582 584 A1

| No. | Baking condition | | | MgO particles or mixed powder | | | | | | | | Grain-oriented electrical steel sheet | | | | Remarks |
|---|---|---|---|---|---|---|---|---|---|---|---|---|---|---|---|---|
| | Atmosphere | Temperature | Time | Average particle size | Circumferential length/thickness | Chemical component (remainder is Mg, O, and impurities) | | | | | B8 [T] | External appearance | Coating adhesion | B8 deterioration due to coating ΔB8 | |
| | | °C | min | | | B | Ca | Ti | BO₃ ratio | [Ca]/[BO₃] | | | | | |
| | | | | μm | | mass% | mass% | mass% | mass% | | | | | | |
| 37 | Air | 900 | 10 | 3.20 | 7.40 | 0.001 | 0.005 | 0.000 | 50 | 10.00 | 1.928 | B | C | 0.013 | Comparative Example |
| 38 | Air | 900 | 10 | 3.20 | 7.40 | 0.080 | 0.005 | 0.000 | 50 | 0.13 | 1.924 | B | A | 0.025 | Comparative Example |
| 39 | Air | 900 | 10 | 3.20 | 7.40 | 0.004 | 0.005 | 0.000 | 50 | 2.37 | 1.922 | B | C | 0.014 | Comparative Example |
| 40 | Air | 900 | 10 | 3.20 | 7.40 | 0.045 | 0.005 | 0.000 | 50 | 0.22 | 1.924 | B | A | 0.028 | Comparative Example |
| 41 | Air | 900 | 10 | 3.20 | 7.40 | 0.022 | 0.030 | 0.000 | 50 | 2.73 | 1.950 | A | A | 0.016 | Inventive Example |
| 42 | Air | 900 | 10 | 3.20 | 7.40 | 0.043 | 0.050 | 0.000 | 50 | 2.34 | 1.930 | A | A | 0.016 | Inventive Example |
| 43 | Air | 900 | 10 | 3.20 | 7.40 | 0.038 | 0.011 | 0.000 | 50 | 0.57 | 1.930 | A | A | 0.014 | Inventive Example |
| 44 | Air | 900 | 10 | 3.20 | 7.40 | 0.019 | 0.011 | 2.975 | 50 | 1.11 | 1.940 | A | A | 0.013 | Inventive Example |
| 45 | Air | 800 | 10 | 3.20 | 9.20 | 0.015 | 0.004 | 2.975 | 50 | 0.57 | 1.940 | A | A | 0.014 | Inventive Example |
| 46 | Air | 700 | 10 | 3.20 | 9.20 | 0.015 | 0.004 | 2.975 | 50 | 0.57 | 1.942 | A | A | 0.014 | Inventive Example |
| 47 | Air | 1100 | 10 | 3.20 | 9.20 | 0.015 | 0.004 | 2.975 | 50 | 0.57 | 1.944 | A | A | 0.013 | Inventive Example |
| 48 | Air | 680 | 10 | MgO as a main agent was not obtained due to poor baking | | | | | | | | | | | Comparative Example |
| 49 | Air | 1120 | 10 | 8.70 | 9.20 | 0.030 | 0.008 | 2.975 | 50 | 0.55 | 1.938 | B | B | 0.018 | Comparative Example |

EP 4 582 584 A1

22

(continued)

| No. | Baking condition | | | MgO particles or mixed powder | | | | | | | Grain-oriented electrical steel sheet | | | | Remarks |
|---|---|---|---|---|---|---|---|---|---|---|---|---|---|---|---|
| | Atmosphere | Temperature | Time | Average particle size | Circumferential length/thickness | Chemical component (remainder is Mg, O, and impurities) | | | | | B8 [T] | External appearance | Coating adhesion | B8 deterioration due to coating $\Delta B8$ | |
| | | °C | min | | | B | Ca | Ti | $BO_3$ ratio | $[Ca]/[BO_3]$ | | | | | |
| | | | | $\mu m$ | | mass% | mass% | mass% | mass% | | | | | | |
| 50 | Nitrogen at-mosphere | 900 | 10 | 3.20 | 9.20 | 0.030 | 0.008 | 2.975 | 50 | 0.55 | 1.938 | A | A | 0.013 | Inventive Example |
| 51 | Air | 900 | 10 | 3.20 | 7.10 | 0.025 | 0.010 | 0 | 50 | 0.80 | 1.944 | A | A | 0.014 | Inventive Example |
| 52 | Air | 900 | 10 | 3.20 | 7.00 | 0.036 | 0.010 | 0 | 50 | 0.56 | 1.942 | A | A | 0.012 | Inventive Ex-ample |
| 53 | Nitrogen at-mosphere | 900 | 10 | 3.20 | 6.80 | 0.024 | 0.010 | 2.975 | 50 | 0.85 | 1.944 | A | A | 0.014 | Inventive Example |
| 54 | Air | 900 | 10 | 3.20 | 5.20 | 0.043 | 0.050 | 0.000 | 50 | 2.34 | 1.930 | A | B | 0.016 | Comparative Example |

In example Nos. 37 and 39, the B content in the MgO particles was excessively low, and the coating adhesion was poor.

In example Nos. 38 and 40, the B content in the MgO particles was excessive, and the magnetic characteristics deterioration amount ΔB8 was poor.

In example Nos. 41 to 47 and 50 to 53, a raw material powder containing Mg-containing raw material particles containing one or two or more selected from the group consisting of magnesium hydroxide, basic magnesium carbonate, and magnesium carbonate, and B-containing particles containing B, in which an average particle size was 0.10 $\mu$m or more and 8.50 $\mu$m or less, was baked at a temperature of 700°C or higher and 1100°C or lower. In the MgO particles obtained after baking, the average particle size was 0.10 $\mu$m or more and 8.50 $\mu$m or less, the B content was 0.005 mass% or more and less than 0.040 mass%, the proportion of tri-coordinated boron in B was 5 mass% or more and less than 70 mass%, and the ratio of a circumferential length to a thickness of primary particles containing MgO was 6.0 or more, so that a grain-oriented electrical steel sheet having excellent B8, external appearance, coating adhesion, and magnetic characteristics deterioration amount ΔB8 was obtained. In particular, in example Nos. 43 to 47 and 50 to 53, the [Ca]/[BO$_3$] value was within a range of 0.05 or more and less than 2.00, the magnetic characteristics deterioration amount ΔB8 was small, and good magnetic characteristics were obtained.

In example No. 48, since the baking temperature was too low, baking of the raw material powder was insufficient, the main agent of the mixed powder did not become MgO, and the mixed powder could not be used as an annealing separator.

In example No. 49, since the baking temperature was too high, the average particle size of the mixed powder was out of the range, and the external appearance and the coating adhesion of the grain-oriented electrical steel sheet were poor.

In example No. 54, the ratio of a circumferential length to a thickness of primary particles of Mg-containing raw material particles was less than 7.0, the ratio of a circumferential length to a thickness of primary particles of MgO particles in the MgO particles or the mixed powder was less than 6.0, and the coating adhesion was poor.

## Claims

1. A mixed powder for an annealing separator comprising MgO as a main agent, wherein

   an average particle size of the mixed powder is 0.10 $\mu$m or more and 8.50 $\mu$m or less,
   the mixed powder contains B, and a B content contained in the entire mixed powder is 0.005 mass% or more and less than 0.040 mass%,
   a proportion of tri-coordinated boron in the B is 5 mass% or more and less than 70 mass%, and
   a ratio of a circumferential length to a thickness of primary particles containing the MgO is 6.0 or more.

2. The mixed powder according to claim 1, comprising Ca and satisfying formula (1) below:

$$0.05 \leq [\mathrm{Ca}]/[\mathrm{BO_3}] < 2.00... \quad \mathrm{Formula}\,(1)$$

   in formula (1), [Ca] is a Ca content (mass%) in the mixed powder, and [BO$_3$] is a content (mass%) of the tri-coordinated boron in the mixed powder.

3. MgO particles, wherein

   an average particle size is 0.10 $\mu$m or more and 8.50 $\mu$m or less,
   a B content is 0.005 mass% or more and less than 0.040 mass%,
   a proportion of tri-coordinated boron in the B is 5 mass% or more and less than 70 mass%, and
   a ratio of a circumferential length to a thickness of primary particles is 6.0 or more.

4. The MgO particles according to claim 3, further comprising Ca and satisfying formula (2) below:

$$0.05 \leq [\mathrm{Ca}]/[\mathrm{BO_3}] < 2.00... \quad \mathrm{Formula}\,(2)$$

   in formula (2), [Ca] is a Ca content (mass%) in the MgO particles, and [BO$_3$] is a content (mass%) of the tri-coordinated boron in the MgO particles.

5. A method for manufacturing a grain-oriented electrical steel sheet, the method comprising using an annealing separator containing the mixed powder according to claim 1 or 2 or the MgO particles according to claim 3 or 4.

6. A method for manufacturing MgO particles, the method comprising baking a raw material powder containing Mg-containing raw material particles containing one or two or more selected from the group consisting of magnesium hydroxide, basic magnesium carbonate, and magnesium carbonate in which a ratio of a circumferential length to a thickness of primary particles is 7.0 or more, and B-containing raw material particles containing B, in which an average particle size is 0.10 $\mu$m or more and 8.50 $\mu$m or less, at a temperature of 700°C or higher and 1100°C or lower.

7. The method for manufacturing MgO particles according to claim 6, wherein the raw material powder contains more than 0 mass% and 0.02 mass% or less of Ca.

8. A method for manufacturing MgO particles, the method comprising baking raw material particles containing B and containing one or two or more selected from the group consisting of magnesium hydroxide, basic magnesium carbonate, and magnesium carbonate in which an average particle size is 0.10 $\mu$m or more and 8.50 $\mu$m or less and a ratio of a circumferential length to a thickness of primary particles is 7.0 or more at a temperature of 700°C or higher and 1100°C or lower.

9. The method for manufacturing MgO particles according to claim 8, wherein the raw material particles contain more than 0 mass% and 0.02 mass% or less of Ca.

10. A method for manufacturing a mixed powder, the method comprising baking a raw material powder containing Mg-containing raw material particles containing one or two or more selected from the group consisting of magnesium hydroxide, basic magnesium carbonate, and magnesium carbonate in which a ratio of a circumferential length to a thickness of primary particles is 7.0 or more, and B-containing raw material particles containing B, in which an average particle size is 0.10 $\mu$m or more and 8.50 $\mu$m or less, at a temperature of 700°C or higher and 1100°C or lower.

**EP 4 582 584 A1**

## INTERNATIONAL SEARCH REPORT

International application No.

**PCT/JP2023/031815**

### A. CLASSIFICATION OF SUBJECT MATTER

*C23C 22/00*(2006.01)i; *C01B 35/12*(2006.01)i; *C21D 8/12*(2006.01)i; *C21D 9/46*(2006.01)i
FI:    C23C22/00 A; C01B35/12 D; C21D8/12 B; C21D9/46 501B

According to International Patent Classification (IPC) or to both national classification and IPC

### B. FIELDS SEARCHED

Minimum documentation searched (classification system followed by classification symbols)

C23C22/00; C01B35/12; C21D8/12; C21D9/46; C01F5/02-5/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2004-176144 A (TATEHO CHEM IND CO LTD) 24 June 2004 (2004-06-24) | 1-10 |
| A | JP 57-34022 A (SHIN NIHON KAGAKU KOGYO KK) 24 February 1982 (1982-02-24) | 1-10 |
| A | JP 2017-128773 A (JFE STEEL CORP) 27 July 2017 (2017-07-27) | 1-10 |
| A | JP 2017-128772 A (JFE STEEL CORP) 27 July 2017 (2017-07-27) | 1-10 |
| A | JP 3-75219 A (ASAHI GLASS CO LTD) 29 March 1991 (1991-03-29) | 1-10 |
| A | JP 1-177376 A (NIPPON STEEL CORP) 13 July 1989 (1989-07-13) | 1-10 |

☐ Further documents are listed in the continuation of Box C.    ☑ See patent family annex.

| | |
|---|---|
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **20 October 2023** | **14 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

26

## INTERNATIONAL SEARCH REPORT
### Information on patent family members

International application No.

**PCT/JP2023/031815**

| Patent document cited in search report | | | Publication date (day/month/year) | Patent family member(s) | Publication date (day/month/year) |
|---|---|---|---|---|---|
| JP | 2004-176144 | A | 24 June 2004 | (Family: none) | |
| JP | 57-34022 | A | 24 February 1982 | (Family: none) | |
| JP | 2017-128773 | A | 27 July 2017 | (Family: none) | |
| JP | 2017-128772 | A | 27 July 2017 | (Family: none) | |
| JP | 3-75219 | A | 29 March 1991 | (Family: none) | |
| JP | 1-177376 | A | 13 July 1989 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022137922 A
- JP 2017128772 A

- JP 2020015982 A